(19) Europäisches Patentamt / European Patent Office / Office européen des brevets

(11) **EP 1 464 519 B1**

(12) **FASCICULE DE BREVET EUROPEEN**

(45) Date de publication et mention
de la délivrance du brevet:
**16.09.2009 Bulletin 2009/38**

(51) Int Cl.:
***B60C 23/20*** *(2006.01)*

(21) Numéro de dépôt: **04016073.1**

(22) Date de dépôt: **15.10.2002**

(54) **Procédé d'estimation de la température de l'air de la cavité interne d'un pneumatique**

Verfahren zur Schätzung von der Lufttemperatur des Innenraums eines Reifens

Method for estimating temperature of a tyre internal cavity

(84) Etats contractants désignés:
**AT BE BG CH CY CZ DE DK EE ES FI FR GB GR
IE IT LI LU MC NL PT SE SK TR**

(30) Priorité: **18.10.2001 FR 0113624**

(43) Date de publication de la demande:
**06.10.2004 Bulletin 2004/41**

(62) Numéro(s) de document de la (des) demande(s)
initiale(s) en application de l'article 76 CBE:
**02781252.8 / 1 438 204**

(73) Titulaires:
• **Société de Technologie Michelin
63000 Clermont-Ferrand (FR)**
• **Michelin Recherche et Technique S.A.
1763 Granges-Paccot (CH)**

(72) Inventeurs:
• **Shepherd, Russel
63170 Perignat-les-Sarlieve (FR)**
• **Abinal, Richard
63960 Veyre-Monton (FR)**
• **Berger, Eric
63410 Loubeyrat (FR)**

(74) Mandataire: **Dequire, Philippe Jean-Marie Denis et
al
M.F.P. Michelin,
SGD/LG/PI-F35-Ladoux
63040 Clermont-Ferrand Cedex 09 (FR)**

(56) Documents cités:
**WO-A-01/17806** **US-A1- 2001 022 551**

**Description**

L'invention a pour objet un procédé d'estimation de la température de l'air de la cavité interne d'un pneumatique en roulage et en particulier lorsque ledit pneumatique fait partie d'un système de roulage à plat.

Un procédé d'estimation de la température de l'air de la cavité interne d'un pneumatique en roulage est connu du document US-A-20010022551.

On sait que la température est un paramètre important pour le fonctionnement des objets caoutchouteux en raison des variations notables des propriétés physiques et mécaniques de ces objets en fonction de cette température. En ce qui concerne les pneumatiques, la température de l'air de la cavité interne définie par la roue et le pneumatique est un indicateur important des conditions de fonctionnement du pneumatique. Il est de plus pas toujours très facile de mesurer cette température en roulage et un besoin existe de pouvoir l'estimer de façon fiable.

L'invention a pour objet un procédé d'estimation de la température de l'air de la cavité interne d'un pneumatique dans lequel :

- préalablement au fonctionnement courant, on réalise une série d'essais de roulage du pneumatique pourvu d'un moyen de mesure de la température de l'air de la cavité à vitesses $V$ et températures extérieures $T_{amb}$ données, le pneumatique supportant une charge donnée et la cavité étant à une pression relative interne donnée et on ajuste une fonction donnant la température de l'air interne $T_{ai}$ en fonction des paramètres vitesse et température extérieure :

$$T_{ai} = F(V, T_{amb}) \; ;$$

- en fonctionnement courant, le pneumatique équipant un véhicule dans les conditions précédentes de charge et de pression relative dans la cavité, on estime la température de l'air interne de la cavité en fonction de la vitesse du véhicule et de la température extérieure au véhicule.

A titre d'exemple préférentiel, la température interne $T_{ai}$ peut être donnée par :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$ température interne estimée à l'instant $t_n$ ; $T_{ai,n-1}$, température interne estimée à l'instant $t_{n-1}$ ; $T_{ss}$, température interne à l'équilibre thermique dans les conditions d'essais données ; $\tau$, coefficient d'ajustement ; et

$$T_{SS} = \left(a + bT_{amb}\right)V^{(c+T_{amb}d)} + T_{amb}$$

où $a, b, c$ et $d$ sont des coefficients d'ajustement.

Il est avantageux de réaliser les essais de roulage dans des conditions telles que la pression relative dans la cavité correspond, à froid, à la pression relative d'usage du pneumatique.

Une telle estimation pourrait notamment être utile dans le cas du fonctionnement de systèmes de roulage à plat. Dans ce cas, il est avantageux de réaliser les essais de roulage dans des conditions de roulage à plat, c'est-à-dire avec une pression relative dans la cavité du pneumatique substantiellement nulle.

Le procédé selon l'invention va maintenant être décrit plus avant, en prenant comme exemple l'application à la détection d'un fonctionnement anormal d'un système de roulage à plat, à l'aide des dessins annexés dans lesquels :

- la figure 1 est une vue de côté d'un appui de sécurité ;
- la figure 2 est une coupe axiale de l'appui de la figure 1 monté sur une jante de roue et en appui contre un pneumatique ;
- la figure 3 est une coupe AA tel qu'indiqué à la figure 1 d'un appui de sécurité ;
- la figure 4 présente l'implantation d'un dispositif avertisseur sur une roue ;
- la figure 5 présente un schéma d'implantation d'un dispositif selon l'invention dans un véhicule ;
- la figure 6 présente l'évolution de la température interne d'un système PAX lors d'un roulage à plat ;
- la figure 7 présente les évolutions de la température interne d'un système PAX lors d'essais analytiques dans différentes conditions ;

- la figure 8 présente une comparaison entre température interne mesurée et estimée lors d'un essai d'un système PAX en roulage à plat ;
- la figure 9 présente une comparaison entre les évolutions des températures internes mesurée et estimée lors d'un roulage analytique ;
- la figure 10 présente une comparaison entre les évolutions des températures internes mesurée et estimée lors d'un roulage analytique similaire à celui de la figure 4 avec une quantité de gel de lubrification inférieure ;
- la figure 11 est similaire à la figure 9 lors d'un roulage analytique avec une quantité de gel de lubrification encore inférieure ; et
- la figure 12 présente un diagramme simplifié d'un exemple du procédé de détection d'un fonctionnement anormal d'un système de roulage à plat.

L'ensemble des essais décrits dans ce qui suit a été réalisé sur un véhicule Renault « Scénic » équipé du système de roulage à plat « PAX » de la Société Michelin comportant un appui de sécurité en caoutchouc.

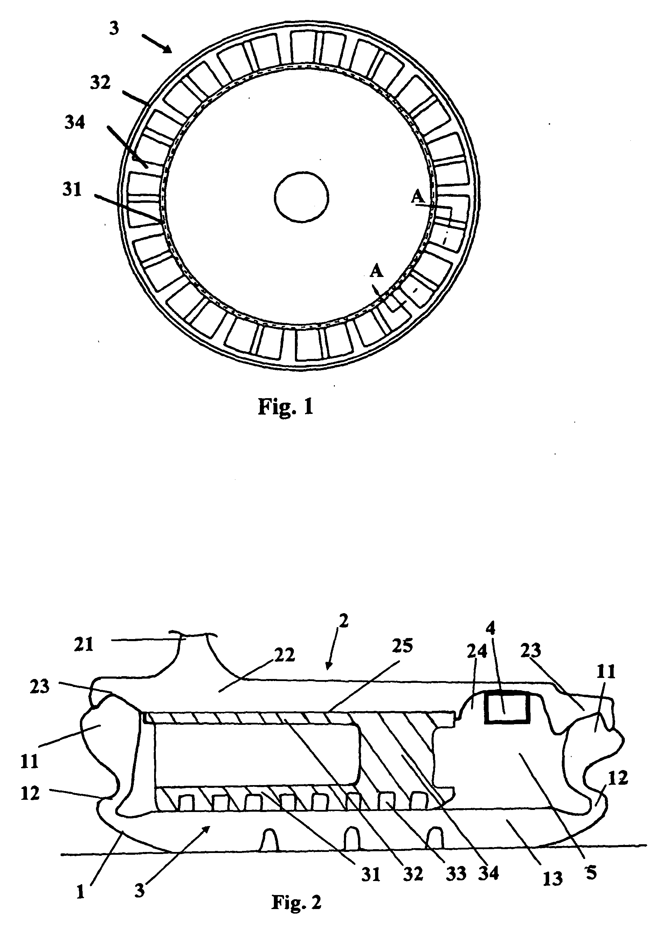

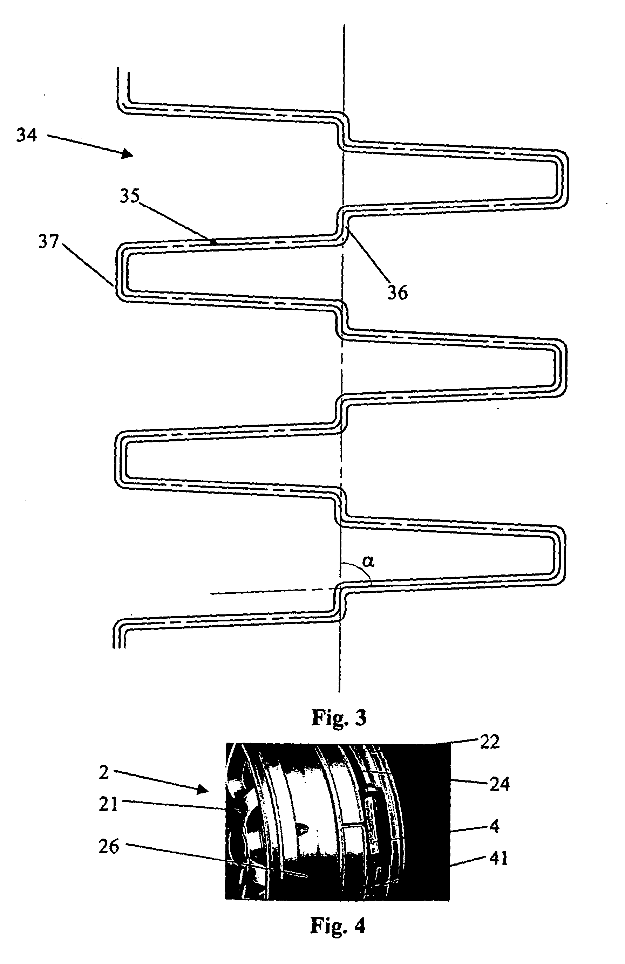

Les figures 1 à 4 illustrent le système de roulage à plat PAX. Ce système comprend un pneumatique 1 (Fig. 2), une roue 2 (figures 2 et 4), un appui de sécurité 3 (figures 1, 2 et 3) et un dispositif avertisseur de dégonflement de la cavité interne définie par le pneumatique et la roue avec pour chaque roue un module de roue 4 disposé dans la cavité interne 5 du pneumatique (Fig. 4).

Le pneumatique 1 comprend deux bourrelets 11, deux flancs 12 et une bande de roulement 13. Ce pneumatique 1 est décrite notamment dans la demande de brevet WO 00/41902. La dimension utilisée dans les essais est 195-620R420 Spacity. Le pneumatique 1 est adaptée pour être montée sur une roue 2 avec un disque 21 (Fig. 4) et une jante 22 (Fig. 2). La jante 22 comprend deux sièges 23, une gorge de montage 24 et une portée de support 25 de l'appui de sécurité. La roue 2 utilisée dans les essais est illustrée à la Fig. 4. La jante de cette roue a une portée de support 25 de l'appui de sécurité 3 avec une gorge circonférentielle d'allégement 26 telle que présentée dans la demande de brevet WO 00/5083. Comme l'illustrent les figures 2 et 4, le module de roue 4 est placé dans la gorge de montage 24 et fixé par une bande rigide 41 entourant cette gorge de montage 24. Le module de roue utilisé est un SmarTire Generation I. Ce module inclut un capteur de pression et un capteur de température. C'est ce module qui a servi dans l'ensemble des essais à mesurer la température interne dans la cavité 5.

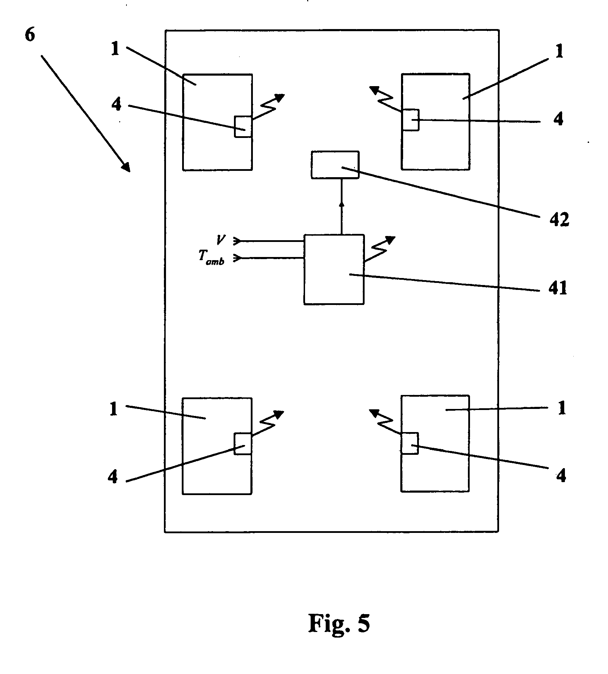

La figure 1 présente une vue de côté de l'appui de sécurité 3 du système PAX. Cet appui comprend essentiellement trois parties. Une base 31, de forme généralement annulaire, un sommet 32, sensiblement annulaire, avec sur sa paroi radialement extérieure (de façon optionnelle) des rainures longitudinales 33 et un corps annulaire 34 de liaison entre la base 31 et le sommet 32. La figure 3 présente un mode particulier de réalisation du corps annulaire 34 tel qu'utilisé dans les essais. La figure 3 est une coupe AA tel que présenté à la figure 1. Le corps annulaire 34 est continu circonférentiellement. Il comprend des cloisons 35 s'étendant de part et d'autre de l'appui avec une partie centrale 36 d'orientation sensiblement circonférentielle. Les cloisons 35 sont inclinées d'un angle $\alpha$ relativement à la direction circonférentielle. Cet angle est proche de 80 degrés. Les cloisons sont ainsi proches d'une orientation axiale. Les cloisons 35 sont reliées entre elles de façon alternée par des liaisons d'orientation circonférentielle 37. Un tel appui de sécurité est décrit dans la demande de brevet WO 00/76791 (mode de réalisation de la figure 5 de cette demande). Les caractéristiques des appuis de sécurité utilisés sont : 115-420(45) ; 115 est la largeur de l'appui, 420 le diamètre nominal du pneumatique et de la jante correspondants et 45 la hauteur de l'appui ; toutes ces cotes sont en millimètres. Ces appuis sont essentiellement réalisés en matériau caoutchouteux.

La figure 2 illustre le fonctionnement du système PAX lors d'un roulage à plat. Lorsque la pression de l'air dans la cavité interne diminue fortement et se rapproche de la pression atmosphérique, la bande de roulement vient en appui contre la paroi radialement extérieure de l'appui de sécurité et c'est cet appui de sécurité qui progressivement va supporter une part croissante de la charge appliquée à la roue. On dit alors que le roulage est un « roulage à plat ». Lorsque la pression dans la cavité interne devient identique à la pression atmosphérique, on dit que « la pression relative » dans la cavité interne est nulle.

Cette figure illustre bien qu'en condition de roulage à plat, on observe un frottement entre la bande de roulement du pneumatique et le sommet de l'appui de sécurité. Ce frottement est susceptible d'entraîner un échauffement important. Pour maîtriser cet échauffement, on inclut usuellement dans la cavité interne du pneumatique un gel de lubrification. Ce gel de lubrification peut être disposé à la surface du sommet de l'appui de sécurité ou dans des réservoirs adaptés tel celui divulgué par la demande WO 01/28789.

La figure 5 présente un schéma d'implantation du dispositif selon l'invention dans un véhicule 6. Le véhicule 6 comprend quatre pneumatiques 1. Le véhicule est équipé d'un avertisseur du dégonflement des pneumatiques 1. Cet avertisseur comporte un module de roue 4 disposé dans chaque ensemble pneumatique/roue du véhicule, une unité centrale 41 disposée dans le châssis du véhicule 6 et un afficheur 42 disposé dans l'habitacle du véhicule. Les modules de roue sont disposés dans les ensemble pneumatique/roue du véhicule de telle sorte d'être en contact avec la cavité interne 5 des pneumatiques (voir figures 2 et 4). Ces modules comportent notamment des capteurs de pression et de température. Les modules de roues 4 et l'unité centrale 41 sont équipés de moyens de transmission de données tels des émetteurs-récepteurs radio et leurs antennes associées. Ces émetteurs-récepteurs radio permettent le transfert des données mesurées par les capteurs de température et de pression inclus dans les modules de roue 4 à l'unité centrale 41. L'unité centrale 41 comporte des moyens de traitement des données reçues, tel un microcalculateur. Ce calculateur est programmé pour identifier l'origine des signaux radio émis par les modules de roues, stocker les valeurs de pression et de température reçues, les traiter, générer des alarmes si nécessaire et les transmettre à l'afficheur 42 pour qu'elles soient portées à la connaissance du conducteur du véhicule. Dans le cas du dispositif selon l'invention, l'unité centrale est aussi connectée à l'odomètre du véhicule ainsi qu'à une sonde de température extérieure disposée sur le châssis du véhicule. Elle reçoit ainsi régulièrement les valeurs de vitesse $V$ du véhicule et de température extérieure $T_n$ au véhicule.

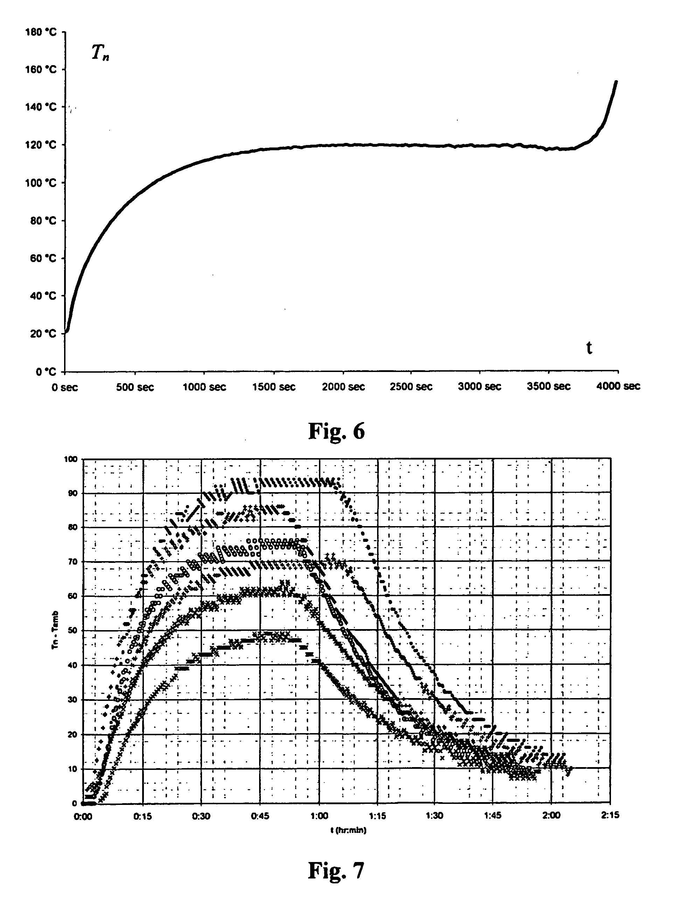

La figure 6 présente une évolution classique de la température de l'air dans la cavité interne du pneumatique ou « température interne » lors d'un essai de roulage à plat sur volant dans des conditions très sévères. Le graphe présente l'évolution de la température $T_n$ en fonction de la durée du test $t$. Après un fort échauffement initial, de l'ordre de 80 degrés Celsius, la température se stabilise. A la fin de l'essai, on constate à nouveau une forte élévation de la température qui témoigne d'un endommagement irréversible de l'appui de sécurité. L'appui n'est alors plus en état de remplir ses fonctions.

Pour pouvoir déterminer empiriquement la température de l'air interne dans la cavité du pneumatique dans des conditions de roulage à plat, on a réalisé une série d'essais analytiques sur volant à vitesses $V$, températures extérieures $T_{amb}$ et charges $Q$ appliquées variables. La figure 7 illustre les résultats obtenus. En abscisse, le graphe présente la durée du test et en ordonnée l'écart mesuré entre la température interne dans la cavité et la température extérieure : $T_n$ - $T_{amb}$.

Les essais ont été réalisés jusqu'à atteindre la température de stabilisation thermique $T_{ss}$ de l'air interne et ensuite ont été arrêtés. On observe donc un fort échauffement comme illustré à la figure 6, puis une phase de température stabilisée suivie par une décroissance. L'ensemble des résultats obtenus à charge appliquée $Q$ maximale peut être modélisé ainsi :

$$T_{SS} = (a + bT_{amb})V^{(c+T_{amb}d)} + T_{amb}$$

avec : $T_{ss}$, température interne à l'équilibre thermique dans les conditions d'essais données, $T_{amb}$, température à l'extérieur du pneumatique, $V$, vitesse de roulage et $a$, $b$, $c$ et $d$ des coefficients d'ajustement.

Pour le système PAX testé, les valeurs des coefficients sont les suivantes :

$a$ = 11.9734 °C.hr/km, $b$ = -0.03152 hr/km, $c$= 0.4852 et $d \approx 0$.
(hr est l'abréviation d'heure, km de kilomètre, °C de degré Celsius)

On peut aussi estimer la température de l'air interne lors des phases transitoires d'échauffement et de refroidissement à l'aide de l'équation :

$$T_{ai,n} = T_{SS} - (T_{SS} - T_{ai,n-1})\exp\left(\frac{4}{\tau}(t_n - t_{n-1})\right)$$

avec : $T_{ai,n}$, température interne estimée à l'instant $t_n$ ; $T_{ai,n-1}$, température interne estimée à l'instant $t_{n-1}$ ; $\tau$, coefficient d'ajustement.

Le coefficient $\tau$ caractérise principalement le temps nécessaire pour obtenir l'équilibre thermique et a pour valeur :

$$\tau = 40 \text{ min lorsque } T_{ss} > T_{ai,n}$$

$$\tau = 130 \text{ min lorsque } T_{ss} < T_{ai,n}$$

(min étant l'abréviation de minute)

On constate que l'équilibre thermique est notablement plus long à atteindre lors d'un refroidissement que lors d'un échauffement.

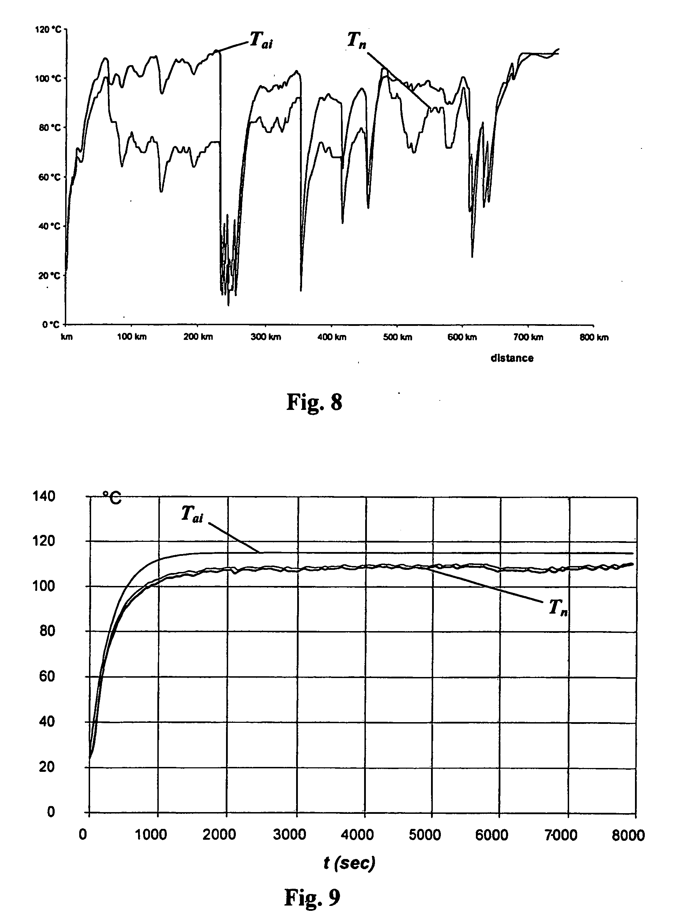

La figure 8 présente les évolutions lors de tests de roulage à plat de longue durée des températures estimées et mesurées. En abscisse, on a la distance parcourue, en ordonnée les températures $T_n$ (mesurée) et $T_{ai,n}$ (estimée). La longueur totale parcourue par le véhicule est de l'ordre de 750 km. On constate que les températures estimées sont pratiquement systématiquement sensiblement supérieures aux températures mesurées. Cela est lié principalement à ce que les essais pris en compte pour établir le modèle empirique sont des essais réalisés à la charge $Q$ maximale pour le pneumatique considéré, alors que les essais de roulage l'ont été à des charges variables. Une autre raison peut aussi être l'imprécision du capteur de mesure de température.

Il est bien entendu possible d'améliorer la précision de l'estimation de la température interne en prenant en compte lors des essais analytiques, mais aussi lors des essais de roulage à plat la charge réelle appliquée au pneumatique.

Le modèle simplifié a cependant une application très importante en terme de sécurité de fonctionnement, il permet de vérifier à chaque instant que le fonctionnement du système de roulage à plat, ici le système PAX, est normal.

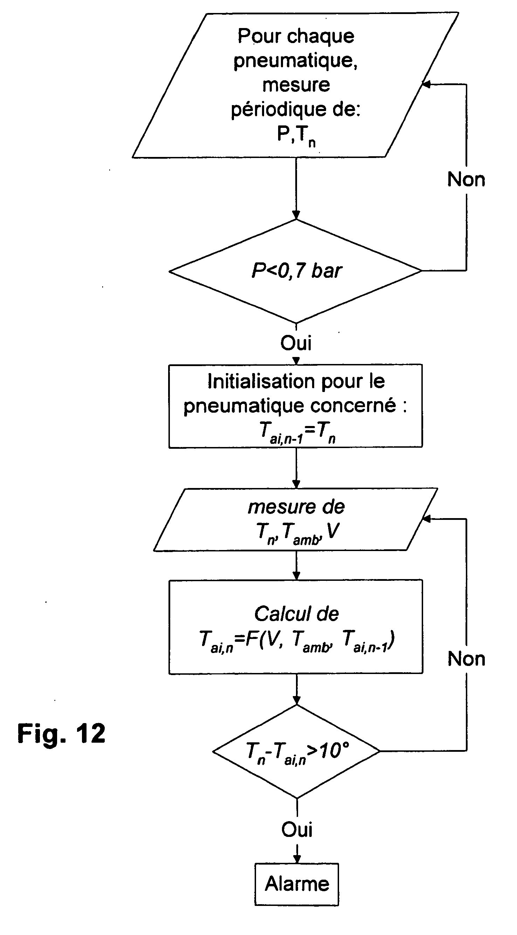

La figure 12 présente un diagramme simplifié du procédé de détection d'un fonctionnement anormal d'un système de roulage à plat. Dès la mise en route du véhicule, l'avertisseur de dégonflement mesure périodiquement pour chaque pneumatique la pression relative et la température de l'air interne de cette cavité. L'unité centrale reçoit, traite les données reçues et déclenche des alarmes appropriées au conducteur. Dès que pour l'un des pneumatiques, la pression relative devient inférieure à un seuil donné, par exemple 0,7 bar, cela veut dire que pour ce pneumatique, la bande de roulement commence à venir en contact avec l'appui de sécurité, on est alors dans des conditions de roulage à plat. L'unité centrale initialise alors le procédé de détection d'un fonctionnement anormal de ce système de roulage à plat. Pour cela, elle reçoit périodiquement les valeurs de température interne $T_n$, vitesse du véhicule V et température extérieure $T_{amb.}$ Périodiquement, l'unité centrale 41 calcule une estimation de la température interne $T_{ai,n}$ et compare cette estimation à la valeur mesurée $T_n$ :

$$T_n - T_{ai,n}$$

Si le résultat de la comparaison est supérieur à 10 degrés Celsius, l'unité centrale génère une alarme et la transmet à l'afficheur 42 pour qu'elle soit portée à la connaissance du conducteur du véhicule.

Lorsqu'un tel écart est enregistré, il est nécessaire d'avertir le conducteur du véhicule que le système de roulage à plat ne fonctionne plus normalement et qu'il lui faut réduire très sensiblement sa vitesse, voire s'arrêter rapidement.

Un exemple concret d'application de ce procédé de détection d'un fonctionnement anormal du système de roulage à plat est maintenant décrit à l'aide des trois figures 9 à 11.

La figure 9 présente l'évolution de la température interne lors d'un roulage dans des conditions de fonctionnement normal d'un système PAX, soit avec notamment 25 grammes de lubrifiant siliconé introduit dans la cavité interne avant l'essai. On constate comme précédemment que la température estimée est sensiblement supérieure à la température mesurée.

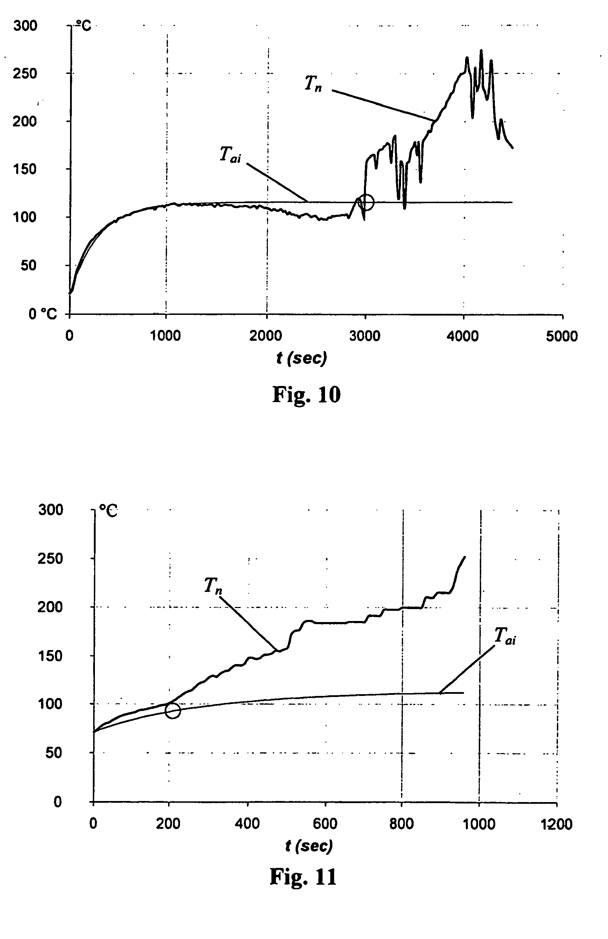

La figure 10 présente le résultat d'un essai similaire dans lequel on a réduit la quantité de gel de lubrification à l'intérieur de la cavité à 15 grammes au lieu de 25. Dans ce cas, on constate que, au bout de 3000 secondes, la température mesurée présente un échauffement important et une alarme est très rapidement déclenchée.

La figure 11 est un essai similaire aux deux précédents dans lequel la quantité de gel de lubrification est encore réduite à 7,5 grammes au lieu de 25 et 15. Dans ce cas, on constate que la température mesurée est toujours supérieure à la température estimée et le seuil d'alerte est franchi après 200 secondes de test.

Ces résultats montrent tout l'intérêt du procédé de détection d'un fonctionnement anormal d'un système de roulage à plat selon l'invention. Il est en effet nécessaire, pour des raisons de sécurité d'usage de pouvoir détecter le plus tôt possible un tel fonctionnement anormal. Un tel fonctionnement anormal peut être lié à une surcharge du pneumatique, à un trou de crevaison très important, ce qui pourrait diminuer la quantité de gel de lubrification présente dans la cavité interne de l'enveloppe ou encore à une durée de roulage à plat trop élevée, ne suivant pas les recommandations des manufacturiers du système. Ce procédé de détection est bien entendu limité à la détection des fonctionnements anormaux qui entraînent une augmentation sensible des conditions de frottement entre l'appui de sécurité et la bande de roulement du pneumatique et ainsi une augmentation sensible de la température interne de l'air interne.

**Revendications**

1. Procédé d'estimation de la température de l'air de la cavité interne d'un pneumatique dans lequel :

- préalablement au fonctionnement courant, on réalise une série d'essais de roulage dudit pneumatique pourvu d'un moyen de mesure de la température de l'air de ladite cavité à vitesses $V$ et températures extérieures $T_{amb}$ données, ledit pneumatique supportant une charge donnée et ladite cavité étant à une pression relative interne donnée et on ajuste une fonction donnant la température de l'air interne $T_{ai}$ en fonction desdits paramètres vitesse et température extérieure :

$$T_{ai} = F(V, T_{amb}) \; ;$$

- en fonctionnement courant, ledit pneumatique équipant un véhicule dans les conditions précédentes de charge et de pression relative dans la cavité, on estime ladite température de l'air interne de la cavité en fonction de la vitesse dudit véhicule et de la température extérieure audit véhicule.

2. Procédé selon la revendication 1, dans lequel la température interne $T_{ai}$ est donnée par :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$, température interne estimée à l'instant $t_n$ ; $T_{ai,n-1}$, température interne estimée à l'instant $t_{n-1}$ ; $T_{ss}$, température interne à l'équilibre thermique dans les conditions d'essais données ; $\tau$, coefficient d'ajustement ; et

$$T_{SS} = \left(a + bT_{amb}\right)V^{(c+T_{amb}d)} + T_{amb}$$

où $a$, $b$, $c$ et $d$ sont des coefficients d'ajustement.

3. Procédé selon l'une des revendications 1 et 2, dans lequel, lors des essais réalisés préalablement au fonctionnement courant, la pression relative dans ladite cavité correspond, à froid, à la pression relative d'usage dudit pneumatique.

4. Procédé selon l'une des revendications 1 et 2, dans lequel, ledit pneumatique faisant partie d'un système de roulage à plat, lors des essais réalisés préalablement au fonctionnement courant, la pression relative dans ladite cavité est substantiellement nulle.


**Claims**

1. Method of estimating the temperature of the air in the internal cavity of a tyre in which:

- prior to normal operation, a series of running tests are carried out on the tyre provided with a means of measuring the temperature of the air in the cavity at given speeds V and external temperatures $T_{amb}$, the said tyre supporting a given load and the said cavity being at a given internal relative pressure, and an adjustment is made to a function giving the temperature of the internal air $T_{ai}$ according to the said parameters of speed and external temperature:

$$T_{ai} = F(V, T_{amb});$$

- in normal operation, the tyre equipping a vehicle under the above conditions of load and relative pressure in the cavity, the said temperature of the internal air in the cavity is measured according to the said speed of the vehicle and the temperature external to the said vehicle.

2. Method according to Claim 1, in which the internal temperature $T_{ai}$ is given by:

$$T_{ai,n} = T_{SS} - \left(T_{SS} - T_{ai,n-1}\right)\exp\left(\frac{4}{\tau}\left(t_n - t_{n-1}\right)\right)$$

with: $T_{ai,n}$, internal temperature estimated at time $t_n$; $T_{ai,n-1}$, internal temperature estimated at time $t_{n-1}$; $T_{ss}$, internal temperature at thermal equilibrium under the given test conditions; $\tau$, adjustment coefficient; and

$$T_{SS} = \left(a + bT_{amb}\right)V^{(c+T_{amb}d)} + T_{amb}$$

where *a, b, c* and *d* are adjustment coefficients.

3. Method according to one of Claims 1 and 2 in which, during tests carried out prior to normal functioning, the relative pressure in the said cavity corresponds, when cold, to the normal relative pressure of the said tyre.

4. Method according to one of Claims 1 and 2 in which, the said tyre forming part of a running-flat system, during tests carried out prior to normal functioning, the relative pressure in the said cavity is substantially zero.

**Patentansprüche**

1. Verfahren zum Schätzen der Temperatur der Luft im Innenhohlraum eines Luftreifens, wobei:

   - vor dem laufenden Betrieb eine Reihe von Rollversuchen des Luftreifens, der mit einem Mittel zum Messen der Temperatur der Luft im Hohlraum versehen ist, bei gegebenen Geschwindigkeiten V und Außentemperaturen $T_{amb}$ ausgeführt wird, wobei der Luftreifen eine gegebene Last trägt und in dem Hohlraum ein gegebener relativer Innendruck herrscht, und eine Funktion angepasst wird, die die Temperatur der Innenluft $T_{ai}$ in Abhängigkeit von den Parametern der Geschwindigkeit und der Außentemperatur angibt:

$$T_{ai} = F(V, T_{amb}) ;$$

   - im laufenden Betrieb, wenn ein Fahrzeug mit dem Luftreifen ausgerüstet ist, unter den oben genannten Bedingungen der Last und des relativen Drucks im Hohlraum die Temperatur der Innenluft des Hohlraums in Abhängigkeit von der Geschwindigkeit des Fahrzeugs und der Temperatur außerhalb des Fahrzeugs geschätzt wird.

2. Verfahren nach Anspruch 1, wobei die Innentemperatur $T_{ai}$ gegeben ist durch:

$$T_{ai,n} = T_{SS} - \left(T_{SS} - T_{ai,n-1}\right)exp\left(\frac{4}{\tau}\left(t_n - t_{n-1}\right)\right)$$

wobei: $T_{ai,n}$ die geschätzte Innentemperatur zum Zeitpunkt $t_n$ ist; $T_{ai,n-1}$ die geschätzte Innentemperatur zum Zeitpunkt $t_{n-1}$ ist; $T_{ss}$ die Innentemperatur im thermischen Gleichgewicht unter den gegebenen Versuchsbedingungen ist; $\tau$ ein Anpassungskoeffizient ist; und

$$T_{SS} = (a + bT_{amb})V^{(c + T_{amb}d)} + T_{amb}$$

wobei *a, b, c* und *d* Anpassungskoeffizienten sind.

3. Verfahren nach einem der Ansprüche 1 und 2, wobei in den Versuchen, die vor dem laufenden Betrieb ausgeführt werden, der relative Druck im Hohlraum im kalten Zustand dem relativen Druck bei der Verwendung des Luftreifens entspricht.

4. Verfahren nach einem der Ansprüche 1 und 2, wobei dann, wenn der Luftreifen einen Teil eines Notlaufsystems bildet, in den Versuchen, die vor dem laufenden Betrieb ausgeführt werden, der relative Druck im Hohlraum im Wesentlichen null ist.

Fig. 1

Fig. 2

**Fig. 3**

**Fig. 4**

**Fig. 5**

**Fig. 6**

**Fig. 7**

Fig. 8

Fig. 9

**Fig. 10**

**Fig. 11**

Pour chaque
pneumatique,
mesure
périodique de:
P,T$_n$

Non

P<0,7 bar

Oui

Initialisation pour le
pneumatique concerné :
T$_{ai,n-1}$=T$_n$

mesure de
T$_n$, T$_{amb}$, V

Calcul de
T$_{ai,n}$=F(V, T$_{amb}$, T$_{ai,n-1}$)

Non

**Fig. 12**

T$_n$-T$_{ai,n}$>10°

Oui

Alarme

**EP 1 464 519 B1**

## RÉFÉRENCES CITÉES DANS LA DESCRIPTION

**Documents brevets cités dans la description**

- US 20010022551 A
- WO 0041902 A
- WO 005083 A
- WO 0076791 A
- WO 0128789 A